# EUROPEAN PATENT SPECIFICATION

(11) **EP 2 594 513 B1**
(45) Date of publication and mention of the grant of the patent: **16.07.2014**
(21) Application number: 12192394.0
(22) Date of filing: 13.11.2012
(51) Int. Cl.: B65G 47/08, B65G 47/82, B65G 47/84

(54) **System for transferring objects between two conveying lines arranged substantially at right angles to each other**
System zur Übertragung von Gegenständen zwischen zwei Förderlinien, die im Wesentlichen rechtwinklig zueinander angeordnet sind
Système pour transférer des objets entre deux lignes de transport placées sensiblement à angle droit l'une par rapport à l'autre

(30) Priority: 18.11.2011 IT BO20110654
(43) Date of publication of application: 22.05.2013
(73) Proprietor: BAUMER S.r.l., 41013 Castelfranco Emilia (IT)
(72) Inventor: Gambetti, Cristina, 40014 Crevalcore (IT)
(74) Representative: Gustorf, Gerhard

(56) References cited:
- WO-A2-98/49083
- DE-C1- 4 235 369
- DE-U1- 20 107 848
- US-A- 3 040 867
- US-A- 4 093 063
- US-A- 4 171 043

## Description

### Field of the Invention

The present invention relates to a system for transferring objects between two conveying lines arranged substantially at right angles to each other, and in particular to a system able to transfer unstable objects, as for example bottles, as set forth in the preamble of claim 1. Such a system is disclosed in US 4 171 043 A.

### Backgrounds of the Invention

At present there are known various systems to transfer objects between two conveying lines arranged substantially at right angle to each other but said knows systems have a series of drawbacks.

A first drawback is due to the fact that they are not able to operate with high operational speeds and, therefore, they are not able to perform a high productivity.

A second drawback is due to the fact that they are not able to operate with high operational speeds for the transferring of unstable objects, as for example single bottles or groups of bottles, since during the transfer with high speed said objects may swing and tilt and they can capsize.

### Object of the Invention

The object of the present invention is therefore to resolve the above mentioned drawbacks.

The invention resolves the problem by means of a system as set forth in claim 1. Further characteristics are disclosed in the dependent claims.

### Brief description of the Drawings

Further characteristics and advantages of the present invention will be made clearer by the following description of a preferred embodiment, provided here purely by way of example and without restrictive intent, with reference to the figures on the attached drawings, in which:
>-Figure 1 is a schematic frontal view of the system object of the present invention;
>-Figure 2 is a schematic top view of the system object of the present invention;
>-The figures 3, 3A, 3B show some functional operative details regarding the present invention;
>-The figure 4 shows a functional detail;
>-The figure 5 schematically shows a constructive detail of the present invention.

### Description of the Preferred Embodiment

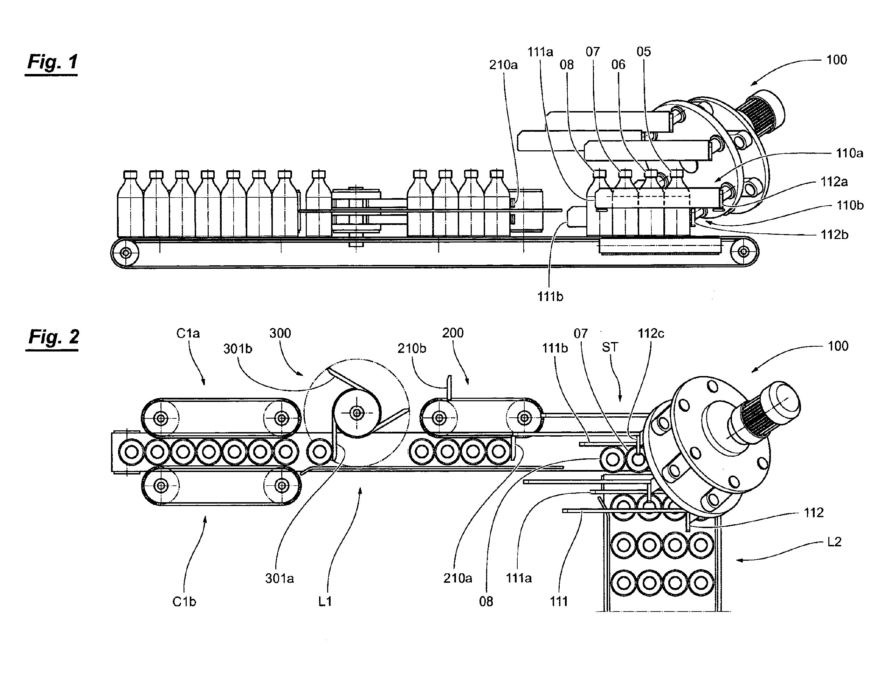

Figures 1 and 2 illustrate the system for transferring objects between two conveying lines L1, L2, arranged substantially at right angle to each other. The first conveying line **L1**, here defined as longitudinal comprises a first transport belt driven with continuous motion and provides to feed the objects in a single succession into a transfer station **ST**. The second conveying line **L2**, here defined as transversal, provides to remove the objects from said transfer station **ST**, in which said objects are indicated with the letter **O** followed by a number able to identify the position of the objects, that is **O1**, **O2**, etc.

The first conveying line **L1** and the second conveying line **L2** have coplanar upper planes.

The portion downstream of the first conveying line **L1** is disposed at the side of the upstream portion of second conveying line **L2,** defining by said two portions a coplanar plane **PT** of transfer on which the articles can slide.

In said transfer station **ST** there are transferring means **100,** better described hereinafter, which are able to move groups of objects **O5_O6_O7_O8** in succession along an inclined transfer path, in which said transfer path connects the downstream portion of the first conveying line **L1** with the upstream portion of the second conveyng line **L2**, and in which said transferring of the objects is executed by sliding the objects on said plane **PT**.

### Description of the System

With reference to the system object of the present invention, in order to execute in said transfer station **ST** the transfer of the objects **O5_O6_O7_O8** from the first conveying line **L1** to the second conveying line **L2** with high operative speed, when the objects **O5_O6_O7_O8** arrive in proximity of the downstream portion of the first conveying line **L1,** they are moved away towards the upstream portion of the second conveying line **L2**, preferably by applying a translation force against the back face of the objects **O5_O6_O7_O8,** in which said force of translation is directed towards the upstream portion of the second conveying line **L2**, in which said translation is executed by sliding the objects **O5_O6_O7_O8** on said transfer plane **PT**.

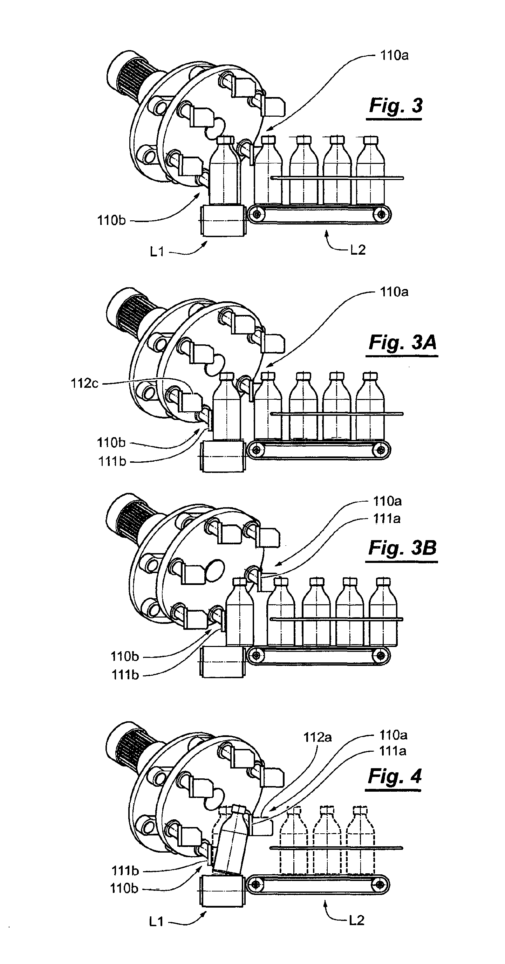

While this operation of pushing and translation is in course, in proximity of the front face of the objects in course of transferring an abutting line is positioned, which moves and advances in phase relationship with the advancement motion of the objects towards the upstream portion of the second conveying line **L2**, in which said abutting line is able to inhibit and/or to limit a possible tilting of the top of the objects towards downstream (see also fig. 4), as well as the swinging of the objects and, therefore, said abutting line is able to inhibit the turnover of the objects during said transfer.

Preferably, during said translation, the push-transfer force acts in proximity of the lower portion of the objects and the abutting line acts in proximity of the upper portion of the objects.

With reference to figures 1 and 2, the system in order to transfer the objects **O5_O6_O7_O8** into said station **ST** between two conveying lines **L1, L2** comprises transferring means **100**, better described hereinafter which are able to move the objects along a transfer path connecting said first transferring line **L1,** with said second transferring line **L2**.

Said transferring means **100** comprises one or more right-angled elements **110a, 110b, etc.,** each of which comprises a first prong **111a, 111b, etc.,** parallel with respect to the first conveying line **L1,** and a second prong **112a, 112b, etc.,** parallel with respect to the second conveying line **L2**.

Said right-angled elements **110a, 110b, etc.** are conducted to move along an operative transfer path for the objects, in which said path comprises a first upstream branch placed in the operating area of the first conveyor line **L1,** and a second downstream branch placed in the operating area of the second conveyor line **L2**.

More in particular, in said transfer station **ST**, in order to transfer of the objects from said first conveying line **L1** to said second conveying line **L2** the following operations are executed: **a)**-a first right-angled element **101 b** is moved along said operative object transfer path by pushing with its front face (with the front face of a first prong **111b**) against the rear face of one or more first determined objects **05-06-07-08,** with the purpose to push said one or first determined objects **O5_O6_O7_O8,** positioned in proximity of the downstream portion of the first conveying line **L1** onto the upstream portion of the second conveying line **L2; b)**-during the execution of the above-mentioned operation **a)** a second right-angled element **110a** is moved along said objects transfer path by maintaining its rear edge (the rear edge of a second prong **111b)** positioned near the front face of said one or more first determined objects **05-06-07-08,** with the purpose to obviate the inclination downstream and/or the swinging of said one or more first determined objects **O5_O6_O7_O8**.

In such context, during the above mentioned operations **a)** and **b)** with reference to the group of objects **O8_O7_O6_O5,** the downstream object **O5** is positioned against the second prong 112b, with the purpose to control and/or to limit the longitudinal movement of the group of objects **O5_O6_O7_O8** caused by the transport of the first conveying line **L1.**

Again with reference to figures 3-3A-3B and 4, during the execution of the operation **a)** the first prong **111b** of a first right-angled element **110b** operates near the lower portion of said one or more first determined objects **O5-06-07-08** while, during the execution of the operation **b),** the first prong **111a** of a second right-angled element **110a** operates near the upper portion of said first one or more determined objects O**5-06-07-08.**

Preferably, during the execution of the operation **b)**, the second right-angled element **110a** is moved by maintaining the rear edge of the first prong **111a** slightly spaced with respect to the front face of the mentioned one or more first determined objects **O5_O6_O7_O8.**

Again with reference to figures 3-3A-3B and 4, each of the right-angled elements **110a, 110b, etc.** is bi-functional, i.e. it executes two different functions and, more in particular:
**1)**-the function of a pusher, since with the front edge of its first prong **111b** - see the right-angled element **110b** - it performs the function of a pushing element for pushing and for transferring one or more first determined objects **O5_O6_O7_O8;**
**2)**-the function of a stabilizer, since with the rear edge of the first prong **111a,** see the right-angled element **110a,** it performs the function of an abutting line in order to obviate an excessive inclination downstream and/or the swinging of said one or more first determined objects **O5_O6_O7_O8** during the transfer.

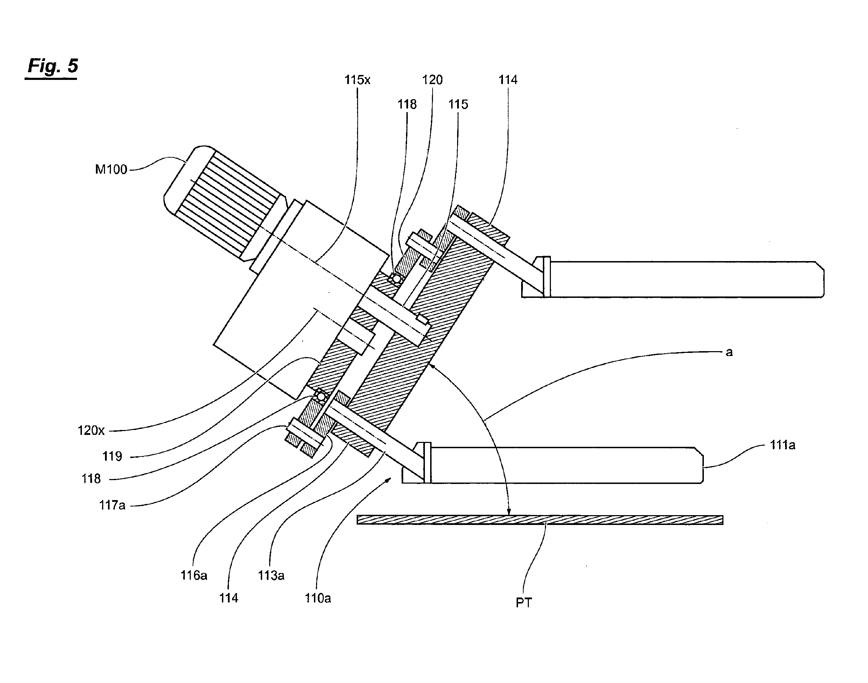

Again with reference to the figures, see in particular fig. 5, said right-angled elements **110a, 110b**, **etc.** are conducted to move in a circular orbit arranged in a vertical tilted plane, in which said plane forms with the translation plane **PT** an acute angle **a**, in which said right-angles elements **110a, 110b, etc.** orbiting in said vertical tilted plane keep the first prong **111a**, **etc.** parallel with respect to the first conveying line **L1** and keep the second prong **112a, etc**., parallel with respect to the second conveying line **L2,** in which a lower segment of said orbital path configures the active path for transferring the objects from the first line **L1** to the second line **L2.**

### Trasferring means 100

With reference to the transferring means 100, see in particular fig. 5, each of said right-angled elements **110a, etc.,** is supported by the first end of a respective first shaft **113a, etc.,** in which each first shaft **113a, etc.** is supported in a rotating manner by a first rotating disk **114.**

The first disk **114** is rotated by a shaft **115** having a rotation axis **115x** and, more in particular, said rotating disk **114** rotates in a vertical tilted plane, which forms with the translation plane **PT** of the objects an acute angle indicated by letter **a** in fig. 5.

The second ends of said shafts **113a, etc.** support in a fixed manner the first ends of respective radial levers **116a, etc.,** and the opposite second ends of said radial levers **116a, etc.** are fixed on the first ends of respective second shafts **117a, etc.**, in which said second shafts **117a, etc.** are supported in a rotatable idle manner by a second rotating disk **120.**

By this kinematic mechanism, when the first rotating disk **114** is rotated by the motor **M-100,** the right-angled elements **110a, 110b, etc.,** are caused to move in a circular orbit arranged in a vertical tilted plane, maintaining in a constant horizontal attitude the first prongs **111a, etc.** and the second prongs **112a, etc.,** maintaining in a constant parallelism the first set of prongs, **111a, etc.,** with the first conveying line **L1,** and maintaining in a constant parallelism the second set of prongs **112a; etc.** with the second conveying line **L2.**

Again with reference to said figures, the lower portion of said circular orbit defined by said right-angled elements **110a, 110b, etc.** acts whithin the operating region of the downstream portion of the first conveying line **L1** and whithin the operating region of the upstream portion of the second conveying line **L2,** defining a slanting path of objects transfer.

### First flow regulating means 200

Again with reference to figures 1 and 2, the system object of the present invention preferably further comprises first flow regulating means **200** placed upstream with respect to the transfer station **ST** and upstream with respect to the trasferring means **100,.**

Said first flow regulating means **200** comprise one or more first abutting elements **210a, 210b, etc.** able to intercept/abut the front face of the objects while said objects are transported along the first conveyor line **L1.**

More in particular, said first flow regulating means **200** comprise a closed loop conveyor, in which said conveyor moves said first abutting elements **210a, 210b, etc.** in an orbit arranged in a horizonatal plane, and in which said orbit comprises an active path defined by a rectilinear segment that extends longitudinally along and into the operating region of said first conveying line **L1,** in which along said active path said first abutting elements **210a, 210b, etc.** intercept the anterior front face of determined objects in process of advancement according to a predetermined sequence, with the purpose to synchronize the advancement towards downstream of the objects with respect to the following transferring means **100**, and with the purpose to form (if desirable) groups of one or more determined numbers of objects, in which the objects of each of these groups are longitudinally disposed one behind the other.

### Second flow regulating means 300

Again with reference to figures 1 and 2, the system object of the present invention can further comprise second flow regulating means **300** positioned upstream with respect to the first flow regulating means **200.**

Said second flow regulating means **300** comprise one or more second abutting elements, **301a, 301b, etc.,** which are able to abut/intercept the front face of the objects while said objects are transported along the first conveyor line **L1,** in which said second abutting elements **301a, 301b, etc.** move along a circular path which comprises a circular segment that extends into the operative area of said first conveying line **L1.**

Said second flow regulating means **300** provide to regulate and to synchronize the downstream advancement of the objects with respect to the successive first flow regulating means **200.**

### Example of Operation

With reference to the above mentioned figures, the objects are fed one behind the other by the conveying line **L1,** in which the transport belt moves with linear and longitudinal speed **V_L1.**

Said objects, so transported, arrive between the vertical walls of the couple of conveyors **C1a-C1b,** in which these conveyors **C1a-C1b** provide for the objects an advancement speed **V_C1,** which is less than **V_L1.**

In reason of the rate between the above cited speeds, **V_C1** and **V**_**L1,** in proximity of the downstream end of the conveyors **C1a_C1b** (after the releasing of the objects by the conveyors **C1a-C1b)** the objects will be arranged one behind the other and longitudinally spaced among them.

In reason of the longitudinal space so obtained, the second flow regulating means **300** provide to insert the respective abutting elements **301a, 301b, etc.,** between the advancing objects and, if necessary, said abutting elements 301a, **301b, etc.,** are able to slow down the speed of travel of the objects towards downstream, with the purpose to synchronize the flow of objects moving towards downstream with respect to the successive first flow regulating means **200.**

When the objects arrive against the abutting elements **210a, 210b, etc.,** said elements **210a, 210b, etc.** move with a speed **V_200** which is less than the speed **V_L1** provided for the first conveying line **L1** and, therefore, groups of objects are formed in which for each group the single objects are longitudinally arranged one aganist the other, that is for each group the longitudinal spaces between the objects have been eliminated.

Then, said first flow regulating means **200** in proximity of its downstream end release the groups of objects, so that said groups can take transport speed **V_L1,** in which said release causes a flow of groups spaced longitudinally between them, in which the single groups arrive into the transfer station **ST** in phase relationship with respect to the moving of the single right-angled elements **110a, 110b, etc.,** with the purpose to transfer said groups towards the second conveyor line **L2** as above-mentioned.

## Claims

1. System for transferring objects **comprising** two conveying lines **(L1, L2)** arranged substantially at a right angle to each other, in which the first conveying line **(L1),** defined as longitudinal, provides to feed the objects into a transfer station **(ST);** in which the second conveying line **(L2),** defined as transversal, provides to remove the objects from said transfer station **(ST);** in which said transfer station **(ST)** comprises transferring means **(100)** able to move the objects in a translation plane (PT) defined by the downstream portion of the first conveying line **(L1)** and the upstream portion of the second conveying line **(L2)**, along a transfer path that connects the first conveyor line **(L1)** with said second conveyor line **(L2), characterized by the fact that** said transferring means (**100**) comprise one or more right-angled elements **(110a, 110b, etc.),** in which each of said right-angled elements **(110a, 110b, etc.)** comprises a first prong **(111a 111b, etc.,)** parallel with respect to the first conveying line **(L1)** and a second prong **(112a, 112b, etc.,)** parallel with respect to the second conveying line **(L2); by the fact that** said right-angles elements **(110a, 110b, etc.)** are moved in a circular orbit arranged in a vertical tilted plane, in which said tilted plane forms with said translation plane (**PT**) for the objects an acute angle (**a**) **and by the fact that** said right-angled elements **(110a, 110b, etc.)** while orbiting in said vertical tilted plane maintain the first prong **(111a, 11b, etc.)** parallel with respect to the first conveying line **(L1)** and the second prong **(112a,112b, etc.)** parallel with respect to the second conveying line **(L2)**

2. System according to **claim 01, characterized by the fact that** each of said right-angled elements (**110a**, **etc**.) is supported by the first end of a respective first shaft (**113a**, **etc**.); **by the fact that** each first shaft (**113a**, **etc.)** is supported in a rotating manner by a first rotating disk (**114**), and **by the fact that** said rotating disk (**114**) rotates in a vertical tilted plane in which said plane forms with the objects translation plane **(PT)** an acute angle **(a).**

3. System according to claim 1 or 2, **characterized by the fact that** during operation the first prong **(111b)** of a first right-angled element **(110b)** operates near the lower portion of one or more-first determined objects **(O5-06-07-08).**

4. System according to claim 3, **characterized by the fact that** the first prong (**111a**) of a second preceding right angled element (**110a**) operates near the upper portion of said first one or more determined objects **(O5-06-07-08).**

5. System according to any of the preceding claims, **characterized by the fact that** each of said right-angled elements **(110a, 110b, etc.)** is bi-functional and executes two different functions: **1)**-the function of a pusher in which the front edge of the first prong **(111b)** performs the function of pushing element for pushing and for transferring one or more first determined objects **(O5_O6_O7_O8)**; **2)**-the function of a stabilizer, in which the rear edge of the first prong **(111a)** performs the function of an abutting line in order to obviate an excessive inclination downstream and/or the swinging of said one or more first determined objects **(O5_O6_O7_O8)** during the transfer.

6. System according to any of the preceding claims, **characterized by the fact** of further comprising first flow regulating means **(200)** positioned upstream with respect to the transfer station **(ST)** and positioned upstream with respect to the transferring means (**100**), **by the fact that** said first flow regulating means **(200)** comprise one or more first abutting elements **(210a, 210b, etc.)** able to abut the front face of the objects while said objects are transported along the first conveyor line **(L1), by the fact that** said first abutting elements **(210a, 210b, etc.)** move along a path which comprises a rectilinear segment longitudinally extending along and into the operative area of said first conveying line **(L1),** and **by the fact that** said first flow regulating means (**200**) provide to regulate and to synchronize the downstream advancement of the objects with respect to the successive transferring means **(100).**

7. System according to any of the preceding claims, **characterized by the fact** of further comprising second flow regulating means **(300)** positioned upstream with respect to the first flow regulating means **(200), by the fact that** said second flow regulating means **(300)** comprise one or more second abutting elements **(301 a, 301 b, etc.)** able to abut the front face the objects while said objects are transported along the first conveyor line **(L1), by the fact that** said second abutting elements **(301a, 301b, etc.)** move along a circular path which comprises a circular segment that extends into the operative area of said first conveying line **(L1),** and **by the fact that** said second flow regulating means (**300**) provide to regulate and to synchronize the downstream advancement of the objects with respect to the successive first flow regulating means **(200).**

## Patentansprüche

1. Vorrichtung zur Übergabe von Gegenständen, umfassend zwei Förderstrecken (L1, L2), die im wesentlichen rechtwinklig zueinander angeordnet sind und von denen die erste, in Längsrichtung verlaufende Förderstrecke (L1) die Gegenstände in eine Transferstation (ST) leitet, während die zweite, in Querrichtung verlaufende Förderstrecke (L2) die Gegenstände aus der Transferstation (ST) übernimmt, die Übergabemittel (100) hat, welche die Gegenstände auf einer Übergabeebene (PT), die definiert ist durch den abströmseitigen Abschnitt der ersten Förderstrecke (L1) und den aufströmseitigen Abschnitt der zweiten Förderstrecke (L2), entlang eines Transferweges bewegen, der die erste Förderstrecke (L1) mit der zweiten Förderstrecke (L2) verbindet, **dadurch gekennzeichnet, dass** die Übergabemittel (100) ein oder mehrere orthogonale Winkelelemente (110a, 110b, etc.) haben, von denen jedes eine erste, parallel zu der ersten Förderstrecke (L1) verlaufende Zinke (111a, 111b, etc.) und eine zweite Zinke (112a, 112b, etc.) hat, die parallel zur zweiten Förderstrecke (L2) ausgerichtet ist, dass sich die rechtwinkligen Elemente (110a, 110b, etc.) auf einer Kreisbahn bewegen, die in einer vertikal geneigten Ebene liegt, die mit der Übergabeebene (PT) einen spitzen Winkel (a) einschließt, und dass die Winkelelemente (110a, 110b, etc.) beim Umlauf in der vertikal geneigten Ebene die erste Zinke (111a, 111b, etc.) parallel zu der ersten Förderstrecke (L1) und die zweite Zinke (112a, 112b, etc.) parallel zu der zweiten Förderstrecke (L2) halten.

2. Vorrichtung nach Anspruch 1, **dadurch gekennzeichnet, dass** jedes der Winkelelemente (110a, etc) am ersten Ende einer ersten Welle (113a, etc) befestigt ist und dass jede erste Welle (113a, etc.) drehbar in einer ersten drehbare Scheibe (114) gelagert ist, die in einer vertikal geneigten Ebene rotiert, welche mit der Übergabeebene (PT) einen spitzen Winkel (a) einschließt.

3. Vorrichtung nach Anspruch 1 oder 2, **dadurch gekennzeichnet, dass** im Betrieb die erste Zinke (111b) eines ersten Winkelelementes (110b) in der Nähe des unteren Bereichs eines oder mehrerer der Gegenstände (05-06-07-08) arbeitet.

4. Vorrichtung nach Anspruch 3, **dadurch gekennzeichnet, dass** die erste Zinke (111a) eines vorausgehenden zweiten Winkelelementes (110a) in der Nähe des oberen Bereichs des ersten oder mehrerer Gegenstände (05-06-07-08) arbeitet.

5. Vorrichtung nach einem der vorhergehenden Ansprüche, **dadurch gekennzeichnet, dass** jedes der Winkelelemente (110a, 1 10b, etc.) bifunktional ist und zwei unterschiedliche Funktionen hat, nämlich erstens die Funktion eines Schiebers, bei dem die vordere Kante der ersten Zinke (111a) einen oder mehrere Gegenstände (05-06-07-08) vorschiebt und weiterleitet, und zweitens die Funktion eines Stabilisators, bei dem die hintere Kante der ersten Zinke (111a) als Anschlag wirkt, um zu verhindern, dass während der Überführung eines oder mehrerer Gegenstände (05-06-07-08) diese zu stark nach vom kippen und/oder in Schwingung geraten.

6. Vorrichtung nach einem der vorhergehenden Ansprüche, **dadurch gekennzeichnet, dass** in Förderrichtung vor der Transferstation (ST)) und der Übergabemittel (100) erste Flussregulierungsmittel (200) angeordnet sind, dass diese Flussregulierungsmittel (200) ein oder mehrere erste Anschlagelemente (210a, 210b, etc.) aufweisen, die in Berührung mit der Vorderseite der Gegenstände kommen, während diese auf der ersten Förderstrecke (L1) transportiert werden, dass sich die ersten Anschlagelemente (210a, 210b, etc.) auf einer Bahn fortbewegen, die ein geradliniges Segment hat, das sich in Längsrichtung und in den Wirkungsbereich der ersten Förderstrecke (L1) erstreckt, und dass die ersten Flussregulierungsmittel (200) den Vorschub der Gegenstände in Richtung auf die nachfolgenden Übergabemittel (100) regulieren und synchronisieren.

7. Vorrichtung nach einem der vorhergehenden Ansprüche, **dadurch gekennzeichnet, dass** in Förderrichtung vor den ersten Flussregulierungsmitteln (200) zweite Flussregulierungsmittel (300) angeordnet sind, die ein oder mehrere zweite Anschlagelemente (301a, 301b, etc.) aufweisen, die in Berührung mit der Vorderseite der Gegenstände kommen, während diese auf der ersten Förderstrecke (L1) transportiert werden, dass sich die zweiten Anschlagelemente (301a, 301b, etc.) auf einer Kreisbahn fortbewegen, die ein Kreissegment hat, das sich in den Wirkungsbereich der ersten Förderstrecke (L1) erstreckt, und dass die zweiten Flussregulierungsmittel (300) den Vorschub der Gegenstände in Richtung auf die ersten Flussregulierungsmittel (200) regulieren und synchronisieren.

## Revendications

1. Dispositif pour transférer des objets entre deux lignes de transport (L1, L2) classées sensiblement à angle droit l'une par rapport à l'autre, dont la première des lignes (L1) s'étendant dans le sens longitudinal apporte les objets dans une station de transfert (ST) tandis que la seconde ligne (L2) s'étendant dans le sens transversal reprend les objets sortant de la station de tranfert (ST) qui est munie de moyens de transmission (100) aptes à transporter les objets sur un plan de transfert (PT), défini par une zone aval de la première ligne de transport (L 1) et par une zone amont de la seconde ligne de transport (L2), le long d'une voie de transfert reliant la première ligne de transport (L1) avec la seconde ligne de transport (L2), **caractérisé par le fait que** les moyens (100) de transmission comprennent un ou plusieurs éléments en équerre (110a, 110b, etc.) chacun ayant un premier doigt (111a, 111b, etc.) s'étendant parallèlement à la première ligne de transport (L1) et un second doigt (112a, 112b, etc.) s'étendant parallèlement à la seconde ligne de transport (L2), **par le fait que** les éléments en équerre (110a, 111b, etc.) se meuvent sur une voie circulaire positionnée dans un plan incliné formant un angle aigu (a) avec le plan de transfert (PT) et **par le fait que** les éléments en équerre (110a, 110b, etc), pendant le tranfert dans le plan incliné, maintiennent le premier doigt (111a, 111b, etc.) parallèle à la première ligne de transport (L1) et le second doigt (112a, 112b, etc.) parallèle à la seconde ligne de transport (L2).

2. Dispositif selon la revendication 1 **caractérisé par le fait que** chaque élément en équerre (110a, etc.) est fixé à la première extrémité d'un premier arbre (113a, etc) et que chaque premier arbre (113a, etc. ) est monté de façon rotative dans un premier disque (114) tournant dans un plan incliné formant un angle aigu (a) avec le plan de transfert (PT).

3. Dispositif selon la revendication 1 ou 2 **caractérisé par le fait que** durant l'opération le premier doigt (111b) d'un premier élément en équerre (110b) travaille à proximité d'une zone inférieure d'un ou plusieurs objets (05-06-07-08).

4. Dispositif selon la revendication 3 **caractérisé par le fait que** le premier doigt (111a) d'un second élément en équerre (110a) précédent travaille à proximité d'une zone supérieure d'un ou plusieurs objets (05-06-07-08).

5. Dispositif selon une des revendications précédentes **caractérisé par le fait que** chaque élément en équerre (110a, 110b, etc.) a deux fonctions différentes, celle d'un poussoir dont le bord avant du premier doigt (111a) avance un ou plusieurs objets (05-06-07-08), et la fonction d'un stabilisateur dont le bord arrière du premier doigt (111a) sert de butée pour éviter que pendant la transmission les objets (05-06-07-08) ne s'inclinent trop en avant et/ou ne se mettent en oscillation.

6. Dispositif selon une des revendications précédentes **caractérisé par le fait que** dans le sens du transport, avant la station de transfert (ST) et les moyens de transmission (100), sont positionnés des moyens de régulation de flux (200) munis d'un ou plusieurs éléments de butée (210a, 210b, etc.) en contact avec la partie antérieure des objets pendant leur transport sur la première ligne de transport (L1), **par le fait que** les premiers éléments de butée (210a, 210b, etc.) se meuvent sur une voie possédant un segment linéaire s'étendant dans le sens longitudinal et dans la zone d'opération de la première ligne de transport (L1), et **par le fait que** les premiers moyens de régulation de flux (200) régularisent et synchronisent l'avance des objets dans le sens des moyens de transmission (100) suivants.

7. Dispositif selon une des revendications précédentes **caractérisé par le fait que** dans le sens du transport, avant les premiers moyens de régulation de flux (200), sont positionnés des seconds moyens de régulation de flux (300) munis d'un ou plusieurs seconds éléments de butée (301a, 301b, etc.) en contact avec la partie antérieure des objets pendant leur transport sur la première ligne de transport (L1), **par le fait que** les seconds éléments de butée (301a, 301b, etc.) se meuvent sur une voie circulaire ayant un segment circulaire s'étendant dans la zone d'opération de la première ligne de transport (L1), et **par le fait que** les seconds moyens de régulation de flux (300) régularisent et synchronisent l'avance des objets dans le sens des premiers moyens de régulation de flux (200).
